# EUROPEAN PATENT APPLICATION

(11) **EP 4 826 589 A1**
(43) Date of publication of application: **21.10.2026**
(21) Application number: 25171334.3
(22) Date of filing: 17.04.2025
(51) Int. Cl.: G06F 30/20, G06F 11/3698, G05B 17/00, G06F 111/10

(54) **METHOD AND SYSTEM OF OPTIMIZING SIMULATION PARAMETERS FOR DRIVING ENVIRONMENT SIMULATION**

(71) Applicant: aiMotive Kft., 1025 Budapest (HU)
(72) Inventor: HELLI, Márton, Budapest (HU); KOVÁCS, Péter Tamás, Budapest (HU); MÓRÓ, Milán János, Tárnok (HU); NYERS, Miklós, Dunakeszi (HU); PORNÓI, Márton, Vác (HU); RUDAN, János, Budakeszi (HU)
(74) Representative: Hofmann, Matthias

(57) **Abstract**

The present disclosure provides a computer-implemented method of optimizing simulation parameters for driving environment simulation, including: obtaining a first set of data of a driving environment; generating, by at least one environment recognition algorithm, at least one environment model based on the first set of data; generating a resimulation model based on the at least one environment model; generating, by a simulator and the at least one environment recognition algorithm, a resimulated environment model based on the resimulation model, wherein the simulator uses the simulation parameters; comparing the resimulated environment model with at least one environment model; and updating the simulation parameters of the simulator based on the comparison to upgrade the driving environment simulation, or performing a sensitivity analysis to determine one or more simulation parameter which influence the comparison the most.

## Description

### TECHNICAL FIELD

The present disclosure is in the field of autonomous driving, in particular a computer-implemented method, system, computer program and non-transitory computer readable medium of optimizing simulation parameters for driving environment simulation.

### BACKGROUND

The development of autonomous driving technology has seen significant progress in recent years, driven by the need for safer and more efficient transportation solutions. Autonomous vehicles rely on extensive training and testing in simulated environments to ensure their systems can handle a variety of real-world scenarios.

Creating accurate simulations that replicate real-world driving conditions, such as weather, traffic, and road layouts, is a complex and challenging task. Ensuring these simulations are reliable and effective is crucial for the development and validation of autonomous driving systems, as well as for other applications requiring precise environment recognition, such as robotics and aerospace.

### SUMMARY

According to a first aspect of the present disclosure, a computer-implemented method of optimizing simulation parameters for driving environment simulation includes: obtaining a first set of data of a driving environment; generating, by at least one environment recognition algorithm, at least one environment model based on the first set of data; generating a resimulation model based on the at least one environment model; generating, by a simulator and the at least one environment recognition algorithm, a resimulated environment model based on the resimulation model, wherein the simulator uses the simulation parameters; comparing the resimulated environment model with at least one environment model ; and updating the simulation parameters of the simulator based on the comparison to upgrade the driving environment simulation, or performing a sensitivity analysis to determine one or more simulation parameter which influence the comparison the most.

This enables the automatic optimization of simulation parameters (such as: visibility range, lighting conditions, amount and type of precipitation, sensor contamination) to increase the realism of simulation with respect to the environment recognition algorithm under consideration.

In some embodiments, the first set of data may be a set of recorded sensor data in a real driving environment or in a simulated driving environment.

In some embodiments, the method may further include: comparing the resimulated environment model with at least one environment model and quantifying a difference value; and updating the simulation parameters to generate new resimulated environments which upgrade the driving environment simulation by lowering the difference value. The result of the comparison is a quantifiable measure (a loss function which measures the sim-to-real gap). In the following step, updating the simulation parameters aims the decrease of such loss.

In some embodiments, the simulator may process the resimulation model based on a rule-based simulation algorithm, or a machine learning-based algorithm, or a combination of both.

In some embodiments, the generating, by at least one environment recognition algorithm, at least one environment model based on the first set of data may include: generating, by a first environment recognition algorithm, a first environment model based on the first set of data; generating, by a second environment recognition algorithm, a second environment model based on the first set of data; and evaluating the first environment model based on the second environment model.

In some embodiments, the second environment recognition algorithm may be the ground truth generation algorithm.

In some embodiments, the method may further include: generating the resimulation model based on the second environment model; generating a second set of data based on the resimulation model by the simulator, wherein the second set of data may be a set of synthetic sensor data; generating, by the first environment recognition algorithm, the resimulated environment model based on the second set of data; evaluating the resimulated environment model based on the second environment model; comparing the evaluation of the first environment model and the evaluation of the resimulated environment model; quantifying a difference value based on the comparison; and updating the simulation parameters of the simulator based on the difference value to upgrade the driving environment simulation, or performing the sensitivity analysis based on the difference value.

In some embodiments, the generating, by a simulator and the at least one environment recognition algorithm, a resimulated environment model based on the resimulation model may include: generating a second set of data based on the resimulation model by the simulator, wherein the second set of data is a set of synthetic sensor data; and generating, by the at least one environment recognition algorithm, the resimulated environment model based on the second set of data.

In some embodiments, the resimulated environment model and the at least one environment model may be compared to obtain a domain gap between the two models, wherein the domain gap may be a quantifiable measure.

In some embodiments, a result of the comparison may be represented in metric form.

In some embodiments, the following steps may be iterative until meeting a criteria: the generating, by a simulator and the at least one environment recognition algorithm, a resimulated environment model based on the resimulation model; the comparing the resimulated environment model with the at least one environment model; and the updating the simulation parameters of the simulator based on the comparison to upgrade the driving environment simulation, or the performing a sensitivity analysis to determine one or more simulation parameter which influence the comparison the most.

In some embodiments, the criteria may be to minimize difference between the resimulated environment model and the at least one environment model, preferably wherein simulation realism of the at least one environment recognition algorithm may be optimized.

According to a second aspect of the present disclosure, a system of optimizing simulation parameters for driving environment simulation includes: a processor; and a storage device storing instructions that, when executed by the processor, cause the system to perform operations including: obtaining a first set of data of a driving environment; generating, by at least one environment recognition algorithm, at least one environment model based on the first set of data; generating a resimulation model based on the at least one environment model; generating, by a simulator and the at least one environment recognition algorithm, a resimulated environment model based on the resimulation model, wherein the simulator uses the simulation parameters; comparing the resimulated environment model with the at least one environment model; and updating the simulation parameters of the simulator based on the comparison to upgrade the driving environment simulation, or performing a sensitivity analysis to determine one or more simulation parameter which influence the comparison the most.

According to a third aspect of the present disclosure, a computer program of optimizing simulation parameters for driving environment simulation is provided. the computer program includes instructions configured to cause a computing device to perform the method according to the first aspect.

According to a fourth aspect of the present disclosure, non-transitory computer readable medium embodies the computer program according to the third aspect.

These and other features, aspects, and advantages will be apparent from a reading of the following detailed description and a review of the associated drawings. It is to be understood that both the foregoing general description and the following detailed description are explanatory and do not restrict aspects as claimed.

### BRIEF DESCRIPTION OF THE DRAWINGS

The present disclosure is further described in terms of exemplary embodiments. These exemplary embodiments are described in detail with reference to the drawings. The drawings are not drawn to scale. These embodiments are non-limiting exemplary embodiments, in which like reference numerals represent similar structures throughout the several views of the drawings, and wherein:
FIG. 1 is a flowchart illustrating an exemplary process 100 of optimizing simulation parameters for driving environment simulation according to some embodiments of the present disclosure.
FIG. 2 is a flowchart illustrating another exemplary process 200 of optimizing simulation parameters for driving environment simulation according to some embodiments of the present disclosure.
FIG. 3 is a schematic diagram of an exemplary architecture 300 of optimizing simulation parameters for driving environment simulation according to some embodiments of the present disclosure.

### DETAILED DESCRIPTION

The following description is presented to enable any person skilled in the art to make and use the present disclosure and is provided in the context of a particular application and its requirements. Various modifications to the disclosed embodiments will be readily apparent to those skilled in the art, and the general principles defined herein may be applied to other embodiments and applications without departing from the spirit and scope of the present disclosure. Thus, the present disclosure is not limited to the embodiments shown but is to be accorded the widest scope consistent with the claims.

The terminology used herein is for the purpose of describing particular example embodiments only and is not intended to be limiting. As used herein, the singular forms "a", "an", and "the" may be intended to include the plural forms as well, unless the context clearly indicates otherwise. It will be further understood that the terms "comprise", "comprises", and/or "comprising", "include", "includes", and/or "including," when used in this specification, specify the presence of stated features, integers, steps, operations, elements, and/or components, but do not preclude the presence or addition of one or more other features, integers, steps, operations, elements, components, and/or groups thereof.

These and other features, and characteristics of the present disclosure, as well as the methods of operation and functions of the related elements of structure and the combination of portions and economies of manufacture, may become more apparent upon consideration of the following description with reference to the accompanying drawings, all of which form a part of this disclosure. It is to be expressly understood, however, that the drawings are for the purpose of illustration and description only and are not intended to limit the scope of the present disclosure. It is understood that the drawings are not to scale.

The flowcharts used in the present disclosure illustrate operations that systems implement according to some embodiments of the present disclosure. It is to be expressly understood, the operations of the flowchart may be implemented not in order. Conversely, the operations may be implemented in inverted order, or simultaneously. Moreover, one or more other operations may be added to the flowcharts. One or more operations may be removed from the flowcharts.

Also, the functionality described herein as being performed by one component may be performed by multiple components in a distributed manner. Likewise, functionality performed by multiple components may be consolidated and performed by a single component. Similarly, a component described as performing particular functionality may also perform additional functionality not described herein. For example, a device or structure that is "configured" in a certain way is configured in at least that way, but may also be configured in ways that are not listed.

In order to make the purpose, technical solution, and advantages of the present disclosure clearer, the present disclosure will be further described in detail below with reference to the accompanying drawings and embodiments. It should be understood that the specific embodiments described herein are merely illustrative of the present disclosure and are not intended to limit the present disclosure.

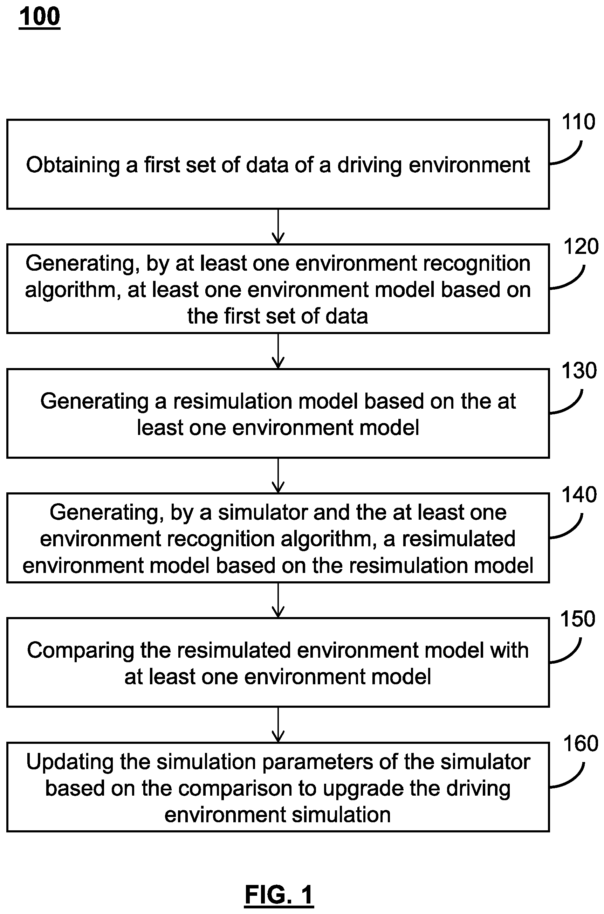

FIG. 1 is a flowchart illustrating an exemplary process 100 of optimizing simulation parameters for driving environment simulation according to some embodiments of the present disclosure. An optimization system is able to perform the process 100. The system includes one or more environment recognition algorithms.

In step 110, the system obtains a first set of data of a driving environment.

The first set of data can reflect any world models perceivable by environment recognition algorithms. Specifically, the first set of data may be a set of recorded sensor data in a real driving environment or in a simulated driving environment. As an example, the first set of data could be any kind of real sensor data including but not limited to radar data, LiDAR data, images, which may be collected from various types of sensors such as radar, LiDAR, camera or other environmental sensors. The real sensor data can reflect the driving environment in a real physical world. With the real sensor data, the system can compare the real physical world (generated based on the first set of data) to a resimulated one (generated by the simulator in the following steps). As another example, the first set of data could be any kind of virtual (e.g., simulated) sensor data that mimics the inputs from real world sensors like cameras, LiDARs, and radars. The virtual sensor data can reflect the driving environment in a simulated world model. With the virtual sensor data, the system can compare this simulated world model (generated based on the first set of data), and a resimulated world (generated by the simulator in the following step). These world models can rely on different simulation techniques and/or hardware/software infrastructure.

In step 120, at least one environment recognition algorithm generates at least one environment model based on the first set of data.

The environment recognition algorithm can interpret and analyze sensor data to understand and model the surrounding environment. These algorithms are capable of detecting, classifying, and estimating the states of various objects and elements within the environment. After processing the first set of data, the environment recognition algorithms can construct at least one environment model. The environment model can be a structured representation of the surroundings.

In one embodiment, a first environment recognition algorithm can generate a first environment model based on the first set of data. A second environment recognition algorithm can generate a second environment model based on the first set of data. The system can evaluate the first environment model based on the second environment model.

Specifically, the first environment recognition algorithm can process the first set of data (e.g., recorded sensor data) to generate the first environment model. The second environment recognition algorithm can process part or the whole of the first set of data to generate the second environment model. The range of used sensors may vary between the first and the second environment algorithm. In an example, the second environment recognition algorithm can be the ground truth generation algorithm. In another example, the second environment recognition algorithm may be different from the first environment recognition algorithm and may process more elaborate sensors or inputs of the recorded sensor data, or involve more elaborate sensors, inputs, tools or methods. There can be cases when a wider range of sensor data is already available in the same recordings, but they are not used by the first environment recognition algorithm. The representation of the environment model can be arbitrary as long as a metric can be defined that measures the similarity of this model to another model attempting to represent the same reality. In case of object detection, this may involve object association, calculation of position, orientation, velocity differences, or any other kinematic/dynamic property, and accumulating them (e.g. average, max, absolute mean, etc.) over a specified region of interest. The evaluation may involve comparing the first environment model and the second environment model to assess their similarity.

In another embodiment, the system can include one environment recognition algorithm which can process the first set of data to generate an environment model. In other words, the second environment recognition algorithm can be the same as the first environment recognition algorithm.

The flexibility to use the same or a different second recognition algorithm allows for tailored evaluations based on specific goals and requirements. Using the same algorithm ensures consistency and simplifies analysis, while using a different algorithm provides enhanced accuracy, diverse methodologies, and complementary strengths.

In step 130, the system generates a resimulation model based on the at least one environment model. Specifically, the system can generate a resimulated scenario based on the at least one environment model. Then the system can generate the resimulation model based on the resimulated scenario.

Resimulation can be defined as a method in simulation technology that leverages recorded sensor inputs from real-world driving scenarios as a basis for generating simulations. It enables the reproduction of scenarios with high fidelity and can support modifications to test under varied conditions or with different parameter adjustments, commonly used to validate vehicle behavior, software functions, or sensor algorithms under repeatable conditions. Briefly, resimulation is the simulation of scenarios that are derived from real-world driving data.

In an example, when there is one environment recognition algorithm, the system can generate the resimulation model based on the environment model produced by the one environment recognition algorithm. In another example, when there are two environment recognition algorithms (for example, the first and second environment recognition algorithms as previously discussed), the system can generate the resimulation model based on the second environment model.

In step 140, a simulator and the at least one environment recognition algorithm generate a resimulated environment model based on the resimulation model. The simulator uses the simulation parameters.

In some embodiments, the simulator can process the resimulation model based on a rule-based simulation algorithm, or a machine learning-based algorithm, or a combination of both.

In some embodiments, the simulator can generate a second set of data based on the resimulation model. the second set of data can be a set of synthetic sensor data. Then the at least one environment recognition algorithm can generate the resimulated environment model based on the second set of data.

In one example, when there is one environment recognition algorithm, the environment recognition algorithm is capable of generating the resimulated environment model.

In another example, when there are two environment recognition algorithms (for example, the first and second environment recognition algorithms as previously discussed), the system can generate the resimulation model based on the second environment model. The simulator can generate a second set of data based on the resimulation model by the simulator. The second set of data is a set of synthetic sensor data. The first environment recognition algorithm can generate the resimulated environment model based on the second set of data.

In step 150, the system compares the resimulated environment model with the at least one environment model. In step 160, the system can update the simulation parameters of the simulator based on the comparison to upgrade the driving environment simulation.

In some embodiments, the system can compare the resimulated environment model with at least one environment model and quantifying a difference value. Then the system can update the simulation parameters to generate new resimulated environments which can upgrade the driving environment simulation by lowering the difference value.

In an example, when there is one environment recognition algorithm, the system can compare the resimulated environment model with the environment model generated by the environment recognition algorithm.

In another example, when there are two environment recognition algorithms (for example, the first and second environment recognition algorithms as previously discussed), the system can evaluate the resimulated environment model based on the second environment model. The evaluation may involve comparing the resimulated environment model and the second environment model to assess their similarity.

In this case, the system can evaluate the first environment model based on the second environment model, and also can evaluate the resimulated environment model based on the second environment model. Then the system can compare the evaluation of the first environment model and the evaluation of the resimulated environment model. Furthermore, the system can quantify a difference value based on the comparison and updating the simulation parameters of the simulator based on the difference value to upgrade the driving environment simulation.

In some embodiments, the system can compare the resimulated environment model and the at least one environment model to obtain a domain gap between the two models, wherein the domain gap is a quantifiable measure (for example, a loss function which measures the sim-to-real gap). The result of the comparison can be represented in metric form. The quantifiable measure could describe the difference between models. This difference can be used to upgrade the world model (by selecting new simulation parameters resulting in lower difference values) or for sensitivity analysis (investigate which simulation parameter influences the value of the difference most.)

In some embodiments, steps 140 to 160 can be repeated until one or more stop criteria are met. The criteria can be to minimize difference between the resimulated environment model and the at least one environment model.

Based on this comparison, the simulation parameters of the simulator can be systematically updated to minimize the domain gap. By iteratively adjusting the parameters, the method can ensure that the simulation closely mirrors real-world scenarios or achieves consistency between different simulated models. The iterative refinement process allows for continuous improvement and adaptability to evolving simulation requirements, making this method suitable for applications such as autonomous vehicle testing, where precise and reliable simulations are important for safety and performance validation.

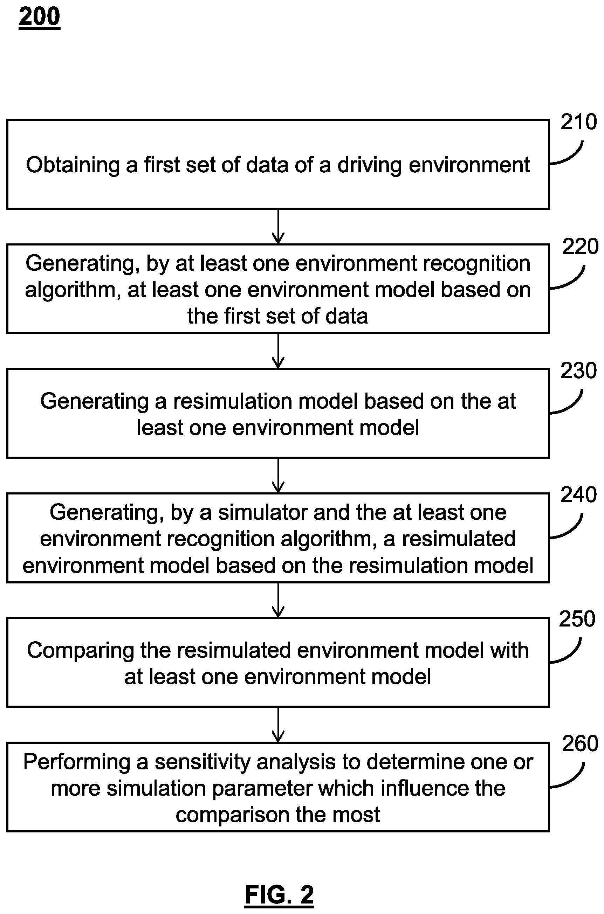

FIG. 2 is a flowchart illustrating another exemplary process 200 of optimizing simulation parameters for driving environment simulation according to some embodiments of the present disclosure. Steps 210 to 250 of FIG. 2 are performed in a manner similar to steps 110 to 150 of FIG. 1. Step 160 of FIG. 1 may be substituted with step 260 of FIG. 2.

In step 260, the system can perform a sensitivity analysis to determine one or more simulation parameter which influence the comparison the most. By identifying the domain gap, or discrepancies between these datasets, the sensitivity analysis can determine which simulation parameters most significantly affect the comparison outcomes. This targeted approach not only ensures high fidelity and realism in the simulation results but also enhances computational efficiency by concentrating efforts on the most impactful parameters. These influential parameters can also be iteratively adjusted to minimize the domain gap, thereby optimizing the simulation.

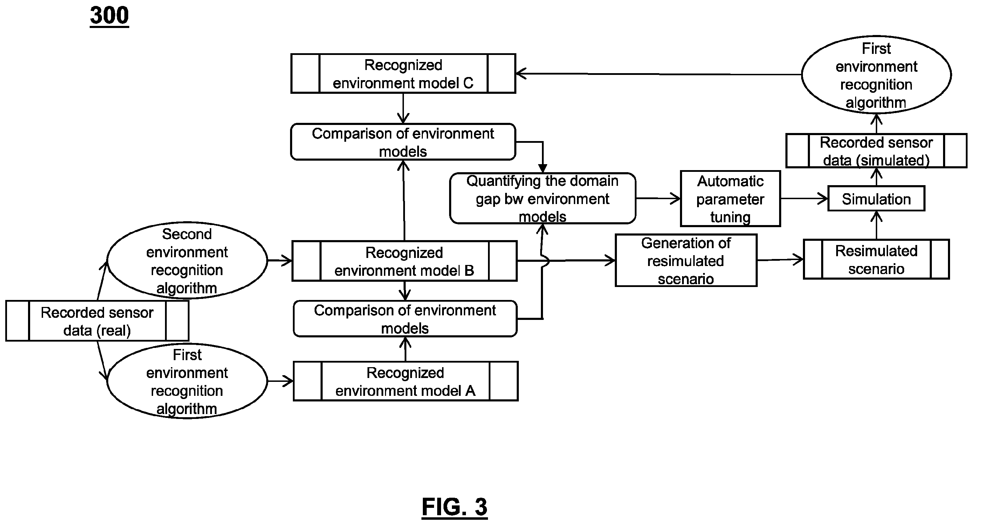

FIG. 3 is a schematic diagram of an exemplary architecture 300 of optimizing simulation parameters for driving environment simulation according to some embodiments of the present disclosure. The architecture is implemented by the system described in the context to perform the methods 100 and 200. In some embodiments, the system can operate according to the architecture 300 and is adapted to achieve automatic optimization of simulation parameters with respect to specific environment recognition algorithms, based on resimulation and quantitative metrics. The resimulation could be a process during which a situation from the real world is re-created in simulation based on recorded sensor data. The metrics of the method shown in FIG.3 can include evaluation metrics used to compare and quantify the performance of different environment recognition models.

It depends on the system under consideration, when simulated sensor models and simulated worlds can be considered realistic enough to be used for testing systems that use real-world or simulated environment recognition algorithms by simulating their sensors. Exposing the output of the recognition algorithm as a well-defined part of the system under consideration, having a method to replicate a real-world scenario in simulation (resimulation), furthermore having a method to compare outputs of the environment recognition system (i.e., high-level object tracks) operating on inputs from the two world models, then similarity can be measured and quantified in terms of the difference between the outputs of the environment recognition system as the "realism" of the simulation, with respect to the specific recognition algorithm. This enables the automatic optimization of simulation parameters (such as: visibility range, lighting conditions, amount and type of precipitation, sensor contamination) to increase the realism of simulation with respect to the environment recognition algorithm under consideration.

Even though FIG.3 describes embodiments of comparing the real physical world to a simulated one, the methods of the present disclosure can be applied to any world models perceivable by environment recognition algorithms, e.g., for comparing two simulated world models relying on different simulation techniques and/or hardware/oftware infrastructure.

At the beginning of the process, recorded sensor data (the recorded sensor data (real) of FIG. 3) can be recorded in a way that can be read and process live or reprocessed later by the system under consideration. This recorded sensor data can be then fed into the system under consideration (containing a first recognition algorithm). The output of the first environment recognition algorithm (the recognized environment model A of FIG. 3) can be recorded. The representation of the environment model can be arbitrary as long as a metric can be defined that measures the similarity of this model to another model attempting to represent the same reality. In case of object detection, this may involve object association, calculation of position, orientation, velocity differences, or any other kinematic/dynamic property, and accumulating them (e.g. average, max, absolute mean, etc.) over a specified region of interest.

Parts or the whole of the same recorded sensor data can be processed by a second recognition algorithm (which can be the same as the first environment recognition algorithm or a different one processing more elaborate sensors or inputs of the recorded sensor data or involving more elaborate sensors, inputs, tools or methods) generating a second representation of the surrounding environment (the recognized environment model B of FIG. 3). In practice, this second algorithm can usually be a ground truth (GT) generation algorithm. In practice, the second recognition environment model can be usually a ground truth (GT) environment model based on which a resimulated scenario can be generated.

This second model (the recognized environment model B of FIG. 3) can in turn be used to generate a simulation model (explicit or implicit representation of the resimulated scenario), which can be processed by a simulator (based on classic simulation algorithms or machine learning-based ones, or a combination of both). The simulator can generate synthetic sensor data according to the resimulated scenario, which can be fed to the system under consideration in the same way as real sensor data. The first environment recognition algorithm, as part of the system under consideration, can in turn produce a world model (the recognized environment model C of FIG.3) that reflects its performance on the simulated input. By comparing the output of the first environment recognition when executed on the real recording and the simulated counterpart, the difference can be interpreted as the domain gap between the two world models, i.e., reality and simulation, as observed by the first environment recognition algorithm. FIG. 3 shows quantifying the domain gap between environment models. The scenario-independent parameters of the simulator can then be automatically tuned in order to minimize the difference between the environment models, in an iterative way. As all the steps of the process can be automated, this method is able to find the optimal parameters of the simulator, in which the difference between real and simulated sensor input is the smallest, from the perspective of the first environment recognition algorithm.

The present disclosure is able to maximize the similarity between the world models to the extent made possible by the parameters of the simulator used w.r.t. the similarity metrics applied. Advantages include one or more of the following:
1. It is possible to fully automate the optimization process.
2. Components used in the process can be used in other parts of the development (i.e. simulation, resimulation, environment model comparison and metrics calculation, ground truth generation).
3. The achieved parametrization can effectively alter simulation performance to match real environmental conditions, i.e., rendering properties, bad visibility conditions (i.e. rain intensity, fog, night, lighting), road and lane marking degradations (degraded paints, water on the road, water spray), errors in capturing the full range of signals presented by the environment (i.e. blooming, overexposure).

The present disclosure could achieve the performance comparison of the recognition layer and could improve sim-to-real gap by iteratively evaluate simulation results while modifying the simulation parameters.

Furthermore, in contrast to behavior modeling and optimization, the present disclosure could optimize the parameters of simulated environments for environment detection based on the difference between metrics of recognition algorithm running on ground truth dynamic environments and its resimulated counterparts.

The present disclosure could also relate to different kinds of metric or quantification on the simulated virtual sensor data in comparison with real-world ground truth sensor data.

Methods or process of the present disclosure could work in a completely open loop setup (without any feedback from the (re)simulated world). The open loop approach is chosen for its simplicity, clarity, and effectiveness in evaluating and optimizing environment recognition algorithms. By focusing on the initial inputs and outputs without feedback from the (re)simulated world, the system can provide a straightforward and independent assessment of the algorithms' performance, facilitating parameter optimization and benchmarking.

In a specific use case, one may compare different simulations and optimize one to reach the quality of the another, w.r.t. how environment recognition works on the simulated models.

To ensure that the second environment recognition algorithm works precisely, the automatically generated second environment model can be manually updated. In this way, the success rate of the optimization process can be increased.

This disclosure provides a method that effectively optimizes the simulation environment within the existing parameter range, minimizing differences between environment models. For further parameterization needs, the approach can be extended and adjusted according to specific application scenarios and requirements to achieve higher optimization results, without departing from the scope of the present disclosure.

To ensure the comprehensiveness of the optimization process, the method may involve multiple simulation runs with different parameter settings. While this process may require computational resources, efficient resource management and optimization strategies can effectively facilitate the completion of the optimization tasks, ensuring the realism and reliability of the simulation environment. It is important to understand that this description serves to illustrate the process and does not limit the scope of the present disclosure. Experts in the field may find various ways to adapt or modify this process without departing from the intended scope.

Techniques of the present disclosure:
4.1. Algorithm-specific realism optimization: the method or process of the present disclosure could focus on optimizing simulation realism specifically for the environment recognition algorithm under test, rather than using general perceptual or physical metrics.
4.2. Output-level comparison: the method or process of the present disclosure can evaluate realism by comparing the outputs of the recognition algorithm when run on real vs. simulated data, instead of comparing raw sensor data or lower-level features.
4.3. Automated parameter tuning: the method or process of the present disclosure may include an iterative, automated process for optimizing simulator parameters to minimize differences between real and simulated outputs.
4.4. Resimulation with ground truth: the method or process of the present disclosure can create a resimulated scenario based on ground truth derived from real sensor data, allowing direct comparison between real and simulated versions of the same scene.
4.5. Flexible environment representation: the method or process of the present disclosure can accommodate arbitrary environment model representations, provided the environment recognition algorithm and so the similarity metric can execute, offering more flexibility than sensor-specific approaches.

The present invention can be integrated in the simulated testing process to improve the fidelity of simulated testing with respect to the environment recognition algorithm under test. It can be used for improving the simulated testing and providing evidence that simulated testing is relevant for the validation of the behavior of the developed automated driving or driver assistance function. By relying on simulation, the amount of tests performed on real roads can be significantly reduced, saving cost. Furthermore, the present invention can be used in any technology development in any field that includes the recognition of the environment with sensors, and where simulation is available to simulate the input of such sensors. These fields typically include any robotic applications, including but not limited to automotive, aerospace, transportation, logistics, remote sensing.

It should be noted that the above description is merely provided for the purposes of illustration, and not intended to limit the scope of the present disclosure. For persons having ordinary skill in the art, multiple variations and modifications may be made under the teachings of the present disclosure. However, those variations and modifications do not depart from the scope of the present disclosure.

Having thus described the basic concepts, it may be rather apparent to those skilled in the art after reading this detailed disclosure that the foregoing detailed disclosure is intended to be presented by way of example only and is not limiting. Various alterations, improvements, and modifications may occur and are intended to those skilled in the art, though not expressly stated herein. These alterations, improvements, and modifications are intended to be suggested by this disclosure, and are within the spirit and scope of the exemplary embodiments of this disclosure.

Moreover, certain terminology has been used to describe embodiments of the present disclosure. For example, the terms "one embodiment," "an embodiment," and/or "some embodiments" mean that a particular feature, structure or characteristic described in connection with the embodiment is included in at least one embodiment of the present disclosure. Therefore, it is emphasized and should be appreciated that two or more references to "an embodiment" or "one embodiment" or "an alternative embodiment" in various portions of this specification are not necessarily all referring to the same embodiment. Furthermore, the particular features, structures or characteristics may be combined as suitable in one or more embodiments of the present disclosure.

Further, it will be appreciated by one skilled in the art, aspects of the present disclosure may be illustrated and described herein in any of a number of patentable classes or context including any new and useful process, machine, manufacture, or composition of matter, or any new and useful improvement thereof. Accordingly, aspects of the present disclosure may be implemented entirely hardware, entirely software (including firmware, resident software, micro-code, etc.) or combining software and hardware implementation that may all generally be referred to herein as a "unit", "module" or "system". Furthermore, aspects of the present disclosure may take the form of a computer program product embodied in one or more computer readable media having computer readable program code embodied thereon.

Furthermore, the recited order of processing elements or sequences, or the use of numbers, letters, or other designations, therefore, is not intended to limit the claimed processes and methods to any order except as may be specified in the claims. Although the above disclosure discusses through various examples what is currently considered to be a variety of useful embodiments of the disclosure, it is to be understood that such detail is solely for that purpose, and that the appended claims are not limited to the disclosed embodiments, but, on the contrary, are intended to cover modifications and equivalent arrangements that are within the spirit and scope of the disclosed embodiments. For example, although the implementation of various components described above may be embodied in a hardware device, it may also be implemented as a software only solution, e.g., an installation on an existing server or mobile device.

Similarly, it should be appreciated that in the foregoing description of embodiments of the present disclosure, various features are sometimes grouped together in a single embodiment, figure, or description thereof for the purpose of streamlining the disclosure aiding in the understanding of one or more of the various embodiments. This method of disclosure, however, is not to be interpreted as reflecting an intention that the claimed subject matter requires more features than are expressly recited in each claim. Rather, claimed subject matter may lie in less than all features of a single foregoing disclosed embodiment.

## Claims

1. A computer-implemented method of optimizing simulation parameters for driving environment simulation, comprising:
obtaining a first set of data of a driving environment;
generating, by at least one environment recognition algorithm, at least one environment model based on the first set of data;
generating a resimulation model based on the at least one environment model;
generating, by a simulator and the at least one environment recognition algorithm, a resimulated environment model based on the resimulation model, wherein the simulator uses the simulation parameters;
comparing the resimulated environment model with at least one environment model; and
updating the simulation parameters of the simulator based on the comparison to upgrade the driving environment simulation, or performing a sensitivity analysis to determine one or more simulation parameter which influence the comparison the most.

2. The method of claim 1, wherein the first set of data is a set of recorded sensor data in a real driving environment or in a simulated driving environment.

3. The method of claims 1 or 2, further comprising:
comparing the resimulated environment model with at least one environment model and quantifying a difference value; and
updating the simulation parameters to generate new resimulated environments which upgrade the driving environment simulation by lowering the difference value.

4. The method of any of claims 1 to 3, wherein the simulator processes the resimulation model based on a rule-based simulation algorithm, or a machine learning-based algorithm, or a combination of both.

5. The method of any of claims 1 to 4, the generating, by at least one environment recognition algorithm, at least one environment model based on the first set of data comprising:
generating, by a first environment recognition algorithm, a first environment model based on the first set of data;
generating, by a second environment recognition algorithm, a second environment model based on the first set of data; and
evaluating the first environment model based on the second environment model.

6. The method of claim 5, wherein the second environment recognition algorithm is the ground truth generation algorithm.

7. The method of any of claims 5 or 6, further comprising:
generating the resimulation model based on the second environment model;
generating a second set of data based on the resimulation model by the simulator, wherein the second set of data is a set of synthetic sensor data;
generating, by the first environment recognition algorithm, the resimulated environment model based on the second set of data;
evaluating the resimulated environment model based on the second environment model;
comparing the evaluation of the first environment model and the evaluation of the resimulated environment model;
quantifying a difference value based on the comparison; and
updating the simulation parameters of the simulator based on the difference value to upgrade the driving environment simulation, or performing the sensitivity analysis based on the difference value.

8. The method of any of claims 1 to 4, wherein the generating, by a simulator and the at least one environment recognition algorithm, a resimulated environment model based on the resimulation model comprising:
generating a second set of data based on the resimulation model by the simulator, wherein the second set of data is a set of synthetic sensor data; and
generating, by the at least one environment recognition algorithm, the resimulated environment model based on the second set of data.

9. The method of any of claims 1 to 8, wherein the resimulated environment model and the at least one environment model are compared to obtain a domain gap between the two models, wherein the domain gap is a quantifiable measure.

10. The method of any of claims 1 to 9, wherein a result of the comparison is represented in metric form.

11. The method of any of claims 1 to 10, wherein the following steps are iterative until meeting a criteria:
the generating, by a simulator and the at least one environment recognition algorithm, a resimulated environment model based on the resimulation model;
the comparing the resimulated environment model with the at least one environment model; and
the updating the simulation parameters of the simulator based on the comparison to upgrade the driving environment simulation, or the performing a sensitivity analysis to determine one or more simulation parameter which influence the comparison the most.

12. The method of claim 11, wherein the criteria is to minimize difference between the resimulated environment model and the at least one environment model, preferably wherein simulation realism of the at least one environment recognition algorithm is optimized.

13. A system of optimizing simulation parameters for driving environment simulation, comprising:
a processor; and
a storage device storing instructions that, when executed by the processor, cause the system to perform operations including:
obtaining a first set of data of a driving environment;
generating, by at least one environment recognition algorithm, at least one environment model based on the first set of data;
generating a resimulation model based on the at least one environment model;
generating, by a simulator and the at least one environment recognition algorithm, a resimulated environment model based on the resimulation model, wherein the simulator uses the simulation parameters;
comparing the resimulated environment model with the at least one environment model; and
updating the simulation parameters of the simulator based on the comparison to upgrade the driving environment simulation, or performing a sensitivity analysis to determine one or more simulation parameter which influence the comparison the most.

14. A computer program of optimizing simulation parameters for driving environment simulation, the computer program comprising instructions configured to cause a computing device to perform the method of any of claims 1 to 12.

15. A non-transitory computer readable medium, the non-transitory computer readable medium embodying the computer program of claim 14.
